# EUROPÄISCHE PATENTSCHRIFT

(11) **EP 3 037 719 B1**
(45) Veröffentlichungstag und Bekanntmachung des Hinweises auf die Patenterteilung: **06.02.2019**
(21) Anmeldenummer: 15201590.5
(22) Anmeldetag: 21.12.2015
(51) Int. Cl.: F21V 5/04, F21V 7/00, F21S 4/28, F21V 5/00, F21Y 115/10, F21Y 103/00

(54) **LED-LINSENKÖRPER ZUR ERZEUGUNG EINES DIREKT- UND INDIREKTLICHTANTEILS**
LED LENSE BODY FOR GENERATING A DIRECT AND INDIRECT LIGHT PORTION
CORPS DE LENTILLE DEL DESTINE A PRODUIRE UNE QUANTITE DE LUMIERE DIRECTE ET INDIRECTE

(30) Priorität: 23.12.2014 DE 102014119616
(43) Veröffentlichungstag der Anmeldung: 29.06.2016
(73) Patentinhaber: Siteco Beleuchtungstechnik GmbH, 83301 Traunreut (DE)
(72) Erfinder: Eichele, Timo, 83362 Surberg (DE)
(74) Vertreter: Schmidt, Steffen

(56) Entgegenhaltungen:
- EP-A1- 2 221 529
- EP-A1- 2 824 380
- EP-A1- 2 884 155
- WO-A1-2014/050008
- DE-A1- 10 104 090
- DE-A1-102010 014 289
- DE-T5-112011 105 462
- US-B2- 8 833 981

## Beschreibung

Die vorliegende Erfindung betrifft einen Linsenkörper für LEDs sowie eine zugehörige Leuchte, welche den Linsenkörper enthält.

Für Innen- oder Außenleuchten werden häufig LEDs (worunter allgemein Halbleiterlichtquellen einschließlich OLEDs zu verstehen sind) als Leuchtmittel eingesetzt, weil diese energiesparend sind und eine lange Lebensdauer aufweisen. Allerdings besitzt eine LED im Vergleich zu einer herkömmlichen Lichtquelle, wie z.B. einer Leuchtstoffröhre, eine besondere Abstrahlcharakteristik. Die LED strahlt nur in einen Halbraum ab, während ein klassisches Leuchtmittel über den gesamten Umfang Licht abstrahlen kann. Daher sind zur Gestaltung der Leuchten zum Teil geänderte Lichtlenkeinrichtungen notwendig, wenn LEDs als Leuchtmittel eingesetzt werden sollen.

Für konventionelle Leuchtstoffröhren sind aus der DE 31 122 53 A1 z.B. Leuchten bekannt, die mit Spiegel einen Direkt- und einen Indirektanteil erzeugen. Außerdem sind z.B. aus der EP 2 058 587 A1 Wannenleuchten mit Leuchtstoffröhren bekannt, die über Prismen in der Abdeckung einen Indirektlichtanteil erzeugen.

Für LED-Leuchten ist es im Stand der Technik bekannt, einen Direkt- und Indirektanteil der Lichtabgabe durch vertikal angeordnete LEDs und Reflektoren in Kegelform zu erzeugen. Durch Kippen der LEDs oder der Kegel kann das Verhältnis von Direkt- und Indirektanteil geregelt werden. Eine solche Konstruktion ist in der DE 2020 100 08598 U1 dargestellt.

Ferner ist es bekannt, separate LEDs zur Erzeugung des Indirektanteils und Direktanteils in der Leuchte zu verwenden.

Die DE 11 2011 105 462 T5 offenbart eine Leuchtdiodenlinse, wobei die Linse einen lichtempfangenen Lichtempfangsabschnitt, einen ersten Lichtübertragungsabschnitt, der dem Lichtempfangsabschnitt entspricht und einen Teil des Lichts in einer Aufwärtsrichtung davon überträgt, einen Reflektionsabschnitt, der sich von dem ersten Lichtübertragungsabschnitt erstreckt und einen Teil des Lichts reflektiert, und einen zweiten Lichtübertragungsabschnitt aufweist, der dem ersten Lichtübertragungsabschnitt gegenüberliegt und das von dem Reflektionsabschnittt reflektierende Licht in einer Abwärtsrichtung davon überträgt.

Weitere Lichtlenkelemente für LEDs sind in der DE 101 04 090 A1, WO 2014/050008 A1, EP 2 221 529 A1, DE 10 2010 014289 A1 und EP 2 884 155 A1 offenbart, wobei letztere Druckschrift nachveröffentlicht ist. Druckschrift EP 2 824 380 A1, die nachveröffentlicht ist, offenbart eine Leuchte.

Aufgabe der vorliegenden Erfindung ist es, eine konstruktiv einfache Möglichkeit für Leuchten mit LEDs als Leuchtmitteln bereitzustellen, die es erlaubt, Licht in unterschiedlichen Richtungen, insbesondere für den Direkt- und Indirektanteil einer Leuchte umzulenken. Gelöst wird die Aufgabe durch einen Linsenkörper nach Anspruch 1 bzw. eine Leuchte nach Anspruch 10.

Der erfindungsgemäßen Lösung liegt der Gedanke zugrunde, dass Licht einer oder einer Reihe von zentral angeordneten LEDs jeweils in unterschiedliche Lichteinkoppelflächen eines Linsenkörpers eintreten zu lassen und die Teillichtbündel entsprechend der gewünschten Beleuchtungsaufgabe zu lenken. Das Teillichtbündel, welche in die zentrale Lichteinkoppelfläche eintritt, kann ohne Reflexion den Linsenkörper durchdringen und aus einer zentralen Lichtauskoppelfläche austreten. Dieser Lichtanteil ist in der Leuchte insbesondere dafür geeignet, um eine Direktbeleuchtung zu erzeugen. Wenn die LED oberhalb des Linsenkörpers angeordnet ist, wird der Direktanteil in Richtung der Hauptstrahlrichtung der LED, d.h. nach unten aus der Leuchte abgegeben. Zwei weiter Teillichtbündel der LED treten in jeweils zwei weitere Lichteinkoppelflächen ein, die seitlich der zentralen Lichteinkoppelfläche angeordnet sind. Diese Teillichtbündel werden jeweils an einer Grenzfläche des Linsenkörpers totalreflektiert, um diese Lichtbündel umzulenken, so dass sie aus jeweils einer Lichtauskoppelfläche etwa in Richtung entgegen der Hauptabstrahlrichtung der LED den Linsenkörper verlassen können. Diese Teillichtbündel eignen sich insbesondere dafür, um für eine Indirektbeleuchtung in Richtung zur Raumdecke oberhalb der Leuchte zu sorgen.

Gemäß einer bevorzugten Ausführungsform erstreckt sich der Linsenkörper senkrecht zu dem Querschnitt linear. In dieser Ausführungsform können mehrere jeweils mittig angeordnete LEDs oberhalb der zentralen Lichteinlcoppelfläche in Richtung der Längserstreckung des Linsenkörpers angeordnet sein. Für jede dieser LEDs gilt die gleiche Aufteilung der Teillichtbündel für die wenigstens eine mittig angeordnet LED, wie vorhergehend beschrieben. Ein solcher Linsenkörper mit der linearen LED-Anordnung kann beispielsweise ähnlich wie eine Leuchtstoffröhre in einer Leuchte angeordnet werden, wobei im Unterschied zur Leuchtstoffröhre noch der Vorteil gegeben ist, dass Licht gezielt zur Direktbeleuchtung nach unten und zur Indirektbeleuchtung nach oben abgegeben wird, während bei der Leuchtstoffröhre das Licht in alle Richtungen abgegeben wird und noch durch weitere Reflektoren umgelenkt werden muss.

Erfindungsgemäß werden die zwei weiteren Teillichtbündel, welche in die jeweils weiteren Lichteinkoppelflächen eintreten, wenigstens drei- oder vierfach totalreflektiert, bevor sie durch die weiteren Lichtauskoppelflächen den Linsenkörper wieder verlassen. Die Umlenkung durch eine mehrfache

Totalreflektion hat den Vorteil, dass in der Art eines Lichtleiters ohne größere Verluste das Licht in die gewünschte Richtung geführt werden kann. Bei einer einfachen Totalreflexion werden demgegenüber die Erfordernisse an die eingesetzten optischen Materialien höher (größerer Brechungsindex), um die Bedingungen für die Totalreflexion einhalten zu können.

Gemäß einer bevorzugten Ausführungsform können die Hauptabstrahlrichtungen der Teillichtbündel, welche aus den zwei weiteren Lichtauskoppelflächen austreten, nicht mehr als 120° auseinander liegen. Dadurch kann eine gleichmäßige Aufhellung der Raumdecke ermöglicht werden.

Gemäß einer bevorzugten Ausführungsform können sich die aus den zwei weiteren Lichtauskoppelflächen austretenden Teillichtbünden außerhalb des Linsenkörpers wenigstens teilweise kreuzen. Dadurch erzeugt das Teillichtbündel aus der Lichtauskoppelfläche von der einen Seite der Leuchte jeweils eine Indirektbeleuchtung auf der gegenüberliegenden Seite der Leuchte. Diese Ausführungsform hat den Vorteil, dass auch der Bereich der Decke direkt oberhalb der LEDs durch die beiden Teillichtbündel aufgehellt werden kann. Beispielsweise können die Teillichtbündel in der Höhe der Raumdecke bereits überlappen, so dass auch der Bereich der Decke direkt oberhalb einer abgehängten Leuchte aufgehellt wird. Ferner hat die Ausführungsform den Vorteil, dass der Linsenkörper sehr kompakt hergestellt werden kann und auch die Deckenfläche direkt oberhalb der LEDs aufgehellt werden kann. Die Umlenkung der für den Indirektanteil vorgesehenen Teilbündel um jeweils mehr als 180° ist insbesondere durch die mehrfache Totalreflexion in dem Linsenkörper möglich.

Gemäß einer bevorzugten Ausführungsform sind bezogen auf die Lage der LED die beiden weiteren Lichtauskoppelflächen des Linsenkörpers in einem Halbraum oberhalb der LED und die wenigstens eine zentrale Lichtauskoppelfläche in einem Halbraum unterhalb der LED angeordnet. Diese Anordnung der Lichtauskoppelflächen in Bezug auf die LED sind besonders geeignet, weil die LED selbst nur in dem unteren Halbraum Licht abgibt. Die Einheit, welche von dem Linsenkörper zusammen mit den LEDs gebildet wird, kann daher in entgegengesetzte Richtungen Licht abgeben, ohne dass auch nur teilweise eine Schattenbildung durch die nach oben nicht abstrahlende LED zu befürchten ist.

Die zentrale Lichteinkoppelfläche und/oder die weiteren Lichtauskoppelflächen des Linsenkörpers können jeweils eben oder konkav oder konvex gekrümmt ausgeführt sein. Ebenso können die zentralen und/oder die weiteren Lichtauskoppelflächen eben oder konkav oder konvex gekrümmt ausgeführt sein. Die Krümmung der Lichteinkoppel- bzw. Lichtauskoppelflächen kann gewählt werden, um eine Lichtbündelung oder eine Lichtaufweitung des jeweiligen Teilbündels zu erzeugen. Insbesondere für die Auskoppelflächen ist die Formgebung entscheidend zur Erzielung der gewünschten Lichtverteilung. Für die Direktbeleuchtung kann eine Form der zentralen Lichtauskoppelfläche gewählt werden, um beispielsweise eine schmale Lichtverteilung in der Art eines einzelnen Spots zu erzeugen. Für die Lichtauskoppelflächen der zwei weiteren Lichtteilbündel, die vorzugsweise die Indirektbeleuchtung der Leuchte bereitstellen, sind Krümmungen der Lichtauskoppelfläche bevorzugt, welche eine Aufweitung der Lichtbündel erzeugen, um eine gleichmäßige Beleuchtung der Raumdecke zu ermöglichen. Es kann auch vorgesehen sein, dass die Lichtauskoppelflächen durch mehrere ebene oder gekrümmte Teilstücke gebildet sind. Beispielsweise kann die Lichtauskoppelfläche auch die Querschnittsform eines Dreiecks annehmen, um das aus der Lichtauskoppelfläche austretende Teillichtbündel noch einmal in zwei Bündel unterschiedlicher Hauptrichtungen zu zerlegen.

Gemäß einer bevorzugen Ausführungsform sind seitlich der zentralen Lichtauskoppelfläche Befestigungselemente, z.B. Haken oder Nuten, in dem Linsenkörper integriert, um ein weiteres optisches Element vor der zentralen Lichtauskoppelfläche anzuordnen und an dem Linsenkörper zu halten. Die Integration der Haken oder Nuten in dem Linsenkörper hat den Vorteil, dass das weitere optische Element präzise gegenüber dem Linsenkörper ausgerichtet ist. Die Verwendung von Halteelementen aus einem anderen Material könnte demgegenüber bei unterschiedlicher thermischer Ausdehnung eine Verlagerung des weiteren optischen Elements bei der Erwärmung der Leuchte zur Folge haben, so dass die präzise Ausrichtung der optischen Komponenten nicht mehr gewährleistet ist.

Gemäß einer Ausführungsform umfasst der Linsenkörper ein weiteres optisches Element, vor der zentralen Lichtauskoppelfläche, das beispielsweise an den vorhergehend erwähnten Haken oder Nuten gehalten wird. Das weitere optische Element kann insbesondere eine Linse oder eine Abdeckscheibe sein. Das optische Element kann klar transparent (insbesondere für Linsen bevorzugt) oder lichtstreuend (insbesondere für Abdeckscheiben bevorzugt) ausgebildet sein.

Gemäß einer bevorzugten Ausführungsform sind in einem Bereich des Linsenkörpers oberhalb und seitlich der zentralen Lichteinkoppelfläche Haken oder Nuten integriert, um den Linsenkörper mit einer Platine zu verbinden, auf welche die wenigstens eine LED angeordnet ist. Ähnlich wie vorhergehend für das weitere optische Element beschrieben, hat die Integration der Halteelemente in dem Material des Linsenkörpers den Vorteil, dass auch die Platine mit den darauf angeordneten LEDs präzise gegenüber dem Linsenkörper angeordnet ist und durch thermische Ausdehnung unterschiedlicher Materialien nicht dejustiert wird.

Gemäß einem weiteren Aspekt der Erfindung umfasst die Leuchte mit dem Linsenkörper gemäß einer der vorhergehenden Ausführungsformen ein Leuchtengehäuse, welches Lichtaustrittsflächen aufweist, aus denen Licht für eine Direktbeleuchtung nach unten und Licht für eine Indirektbeleuchtung nach oben austritt. Das Licht für die Direktbeleuchtung wird aus dem ersten Teillichtbündel gebildet, welches den Linsenkörper aus der zentralen Lichtauskoppelfläche verlässt, während das Licht für die Indirektanteile wenigstens überwiegend aus den weiteren Teillichtbündeln gebildet wird, welches den Linsenkörper aus den zwei weiteren Lichtauskoppelflächen verlässt.

Gemäß einer bevorzugten Ausführungsform umfasst die Leuchte Reflektoren, welche das Licht umlenken, welches den Linsenkörper aus der zentralen Lichtauskoppelfläche und/oder aus den zwei weiteren Lichtauskoppelflächen verlässt. Durch die Reflektoren kann eine weitere Bündelung oder Aufweitung der jeweiligen Teillichtbündel erzielt werden, um die gewünschte Beleuchtungsaufgabe zu erzielen. Es können auch mehrere der genannten Teillichtbündel von einem durchgängigen Reflektor der Leuchte umgelenkt werden.

Gemäß einer bevorzugten Ausführungsform sind Reflektoren der Leuchte vorgesehen, die das Licht, welches den Linsenkörper aus den zwei weiteren Lichtauskoppelflächen verlässt, seitlich durch eine oder mehrere Reflexionen um wenigstens 90° umlenkt. In dieser Ausführungsform kann das aus dem Linsenkörper nach oben abgegebene Licht dazu verwendet werden, um eine Lichtabgabe seitlich neben dem direkt nach unten abgegebenen Licht zu ermöglichen. Eine solche Leuchte eignet sich z.B. als Anbauleuchte oder Einbauleuchte für eine Raumdecke, wobei die weiteren Teillichtbündel im Ergebnis dazu dienen, um den Leuchtdichtenunterschied zwischen der zentralen Lichtaustrittsfläche der Leuchte nach unten und den direkt benachbarten Bereichen zu verringern.

Gemäß einer weiteren Ausführungsform der Leuchte sind unterhalb der Lichtauskoppelfläche des Linsenkörpers mehrere Lamellen angeordnet, welche parallel zu dem besagten Querschnitt des Linsenkörpers, d.h. insbesondere senkrecht zur Längserstreckung des Linsenkörpers, angeordnet sind. Diese Lamellen können zur Entblendung der Leuchte dienen.

Gemäß einer bevorzugten Ausführungsform der Leuchte sind die zwei weiteren Lichtauskoppelflächen innerhalb des Gehäuses oder in geringem Abstand (weniger als 5 cm) oberhalb des Gehäuses angeordnet. Dadurch kann eine kompakte Leuchtenbauweise realisiert werden. Die Lichtauskoppelflächen des Linsenkörpers sind durch das Gehäuse auch geschützt. Ferner können die zwei weiteren Lichtauskoppelflächen auch innerhalb jeweils eines Reflektors angeordnet sein, um das Licht der weiteren Teillichtbündel in eine gewünschte Richtung umzulenken. Beispielsweise können die Reflektoren das Licht nach oben zur Indirektbeleuchtung abgeben. Gemäß einer alternativen Ausführungsform kann das Licht auch nach unten umgelenkt werden, um Bereiche direkt neben der zentralen Lichtaustrittsfläche aufzuhellen.

Die Integration der weiteren Lichtauskoppelflächen in das Leuchtengehäuse oder direkt an das Leuchtengehäuse hat ferner den Vorteil, dass das Leuchtengehäuse selbst nicht als Schatten auf einer zu beleuchtende Raumdecke erkennbar ist, weil das Licht für den Indirektanteil nicht um das Leuchtengehäuse herumgeführt werden muss.

Weitere Merkmale und Vorteile der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt:
- Figur 1: zeigt einen Querschnitt eines Linsenkörpers in der ersten Ausführungsform.
- Figur 2: zeigt Querschnitte von jeweils eines Abschnitts eines Linsenkörpers in verschiedenen Ausführungsformen.
- Figuren 3a-d: zeigen den Linsenkörper nach Figur 1 mit unterschiedlichen zusätzlichen optischen Einrichtungen.
- Figur 4a: zeigt eine Leuchte mit einem Linsenkörper nach Figur 1 in geschnittener perspektivischer Ansicht.
- Figur 4b: zeigt die Leuchte nach Figur 4a im Querschnitt.
- Figur 4c: zeigt die Leuchte wie in Figur 4b jedoch mit gedrehter LED.
- Figur 5: zeigt einen Querschnitt einer weiteren Leuchte mit einem Linsenkörper nach Figur 1.
- Figur 6: zeigt einen Querschnitt einer weiteren Leuchte mit einem Linsenkörper nach Figur 1.

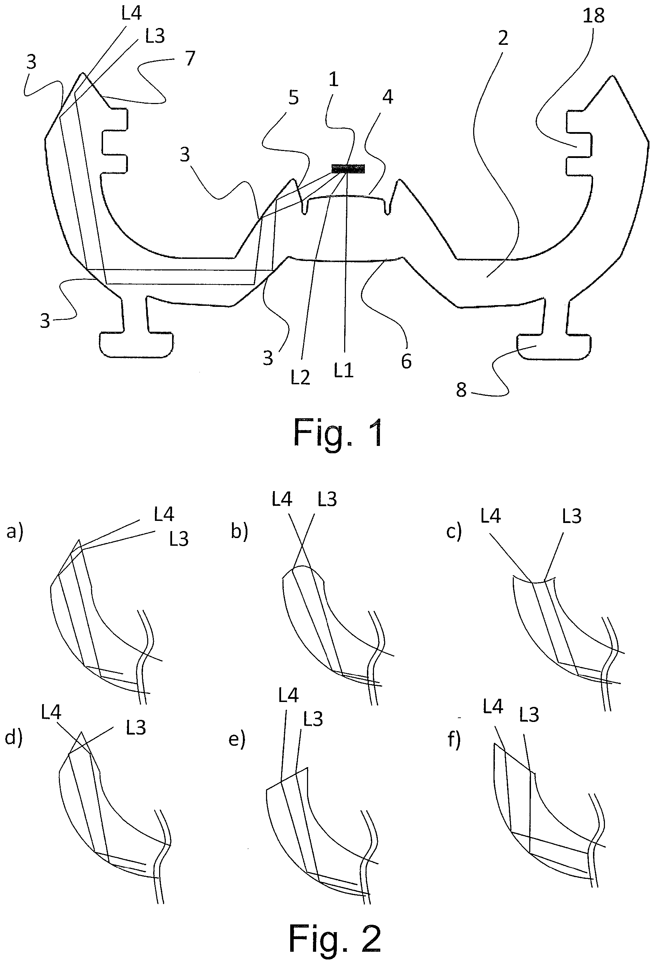

Bezugnehmend auf die Figur 1 ist ein Linsenkörper gemäß einer Ausführungsform der vorliegenden Erfindung in einem Querschnitt dargestellt. Es ist zu verstehen, dass der Linsenkörper sich in der Richtung senkrecht zur Bildebene mit konstantem Querschnitt erstreckt.

Eine in einen Halbraum abstrahlenden Lichtquelle, wie beispielsweise eine LED 1, koppelt Licht von oben in den Linsenkörper 2 ein. Der Linsenkörper ist aus einem transparenten Kunststoff, wie PMMA, oder einem Glas hergestellt. Das Licht der LED 1 tritt in eine zentrale Lichteinkoppelfläche 4 und zwei daran seitlich angeordnete Lichteinkoppelflächen 5 ein. Das in die Lichteinkoppelfläche 4 eintretende Lichtbündel (in den Figuren durch die Lichtstrahlung L1 und L2 dargestellt) tritt aus einer gegenüberliegenden zentralen Lichtauskoppelfläche 6 wieder aus dem Linsenkörper 2 aus und kann insbesondere zur Bildung eines Direktlichtanteils für eine Leuchte Verwendung finden. Die seitlichen Teillichtbündel, welche in die Lichteinkoppelflächen 5 eintreten (in der Figur durch die Lichtstrahlen L3 und L4 auf nur einer Seite dargestellt) werden über zwei Arme durch mehrfache Totalreflexionen an Grenzflächen 3 des Linsenkörpers 2 in den oberen Halbraum umgelenkt und treten an Lichtauskoppelflächen 7 des Linsenkörpers wieder aus. Dieser Anteil des Lichts kann insbesondere zur Bildung einer Indirektbeleuchtung einer Leuchte verwendet werden.

Die Lichtauskoppelflächen 7 können verschiedene Geometrien aufweisen, die beispielhaft in der Figur 2 in sechs verschiedenen Ausführungen dargestellt sind. Insbesondere sind ebene (Figuren 2a, 2e und 2f), konvex gekrümmte (Figur 2b) und konkav gekrümmte (Figur 2c) Formen für die Lichtauskoppelfläche möglich. Ferner kann die Lichtauskoppelfläche auch durch zwei Teilstücke, die z.B. dreieckförmig zusammengesetzt sind (Figur 2d) gebildet sein. Die verschiedenen Geometrien der Lichtauskoppelflächen erzeugen, wie in der Figur 2 dargestellt, unterschiedliche Verteilungen der austretenden Lichtbündel. Insbesondere können die austretenden Lichtbündel aufgeweitet, aufgeteilt oder fokussiert werden.

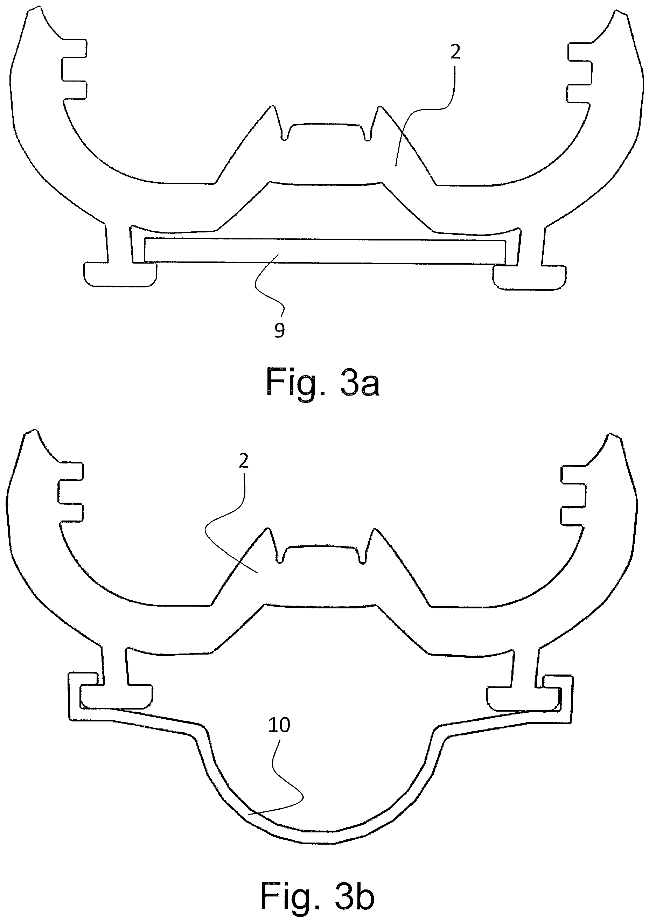

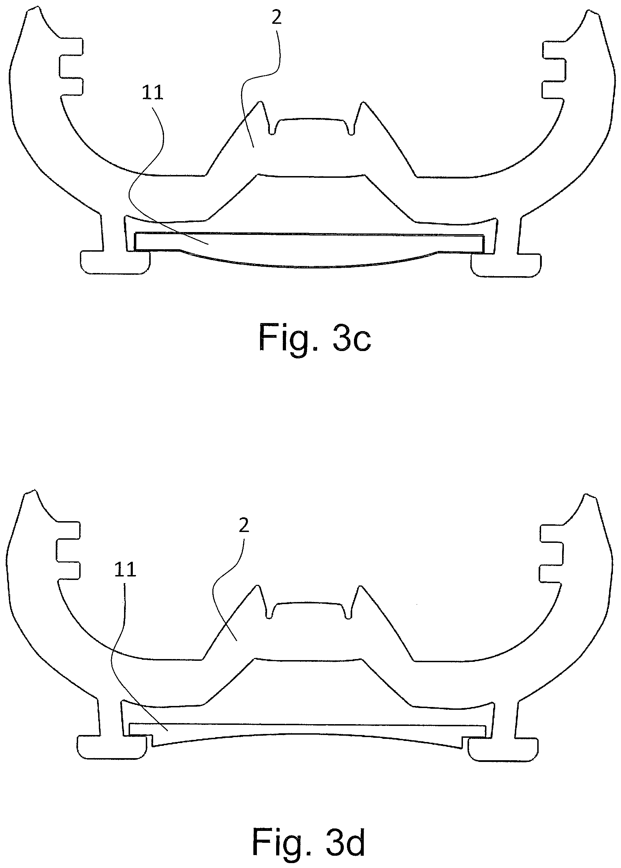

Der Linsenkörper 2 ist außerdem seitlich der Lichtauskoppelfläche 6 mit Haken 8 versehen, an denen zusätzliche optische Elemente befestigt werden können, wie in den Figuren 3a bis 3d dargestellt ist. Die zusätzlichen optischen Elemente können z.B. eine Diffusorscheibe oder -folie 9, eine Diffusorprofilscheibe 10 oder eine zusätzliche Sammel- oder Streulinse 11, wie in den Figuren 3a bis 3d dargestellt, umfassen. Durch das zusätzlich optische Element wird der Lichtanteil für die Direktbeleuchtung, welche aus der zentralen Lichtauskoppelfläche 6 austritt, umgeformt, um für eine gewünschte Lichtverteilung des Direktanteils in einer Leuchte zu sorgen.

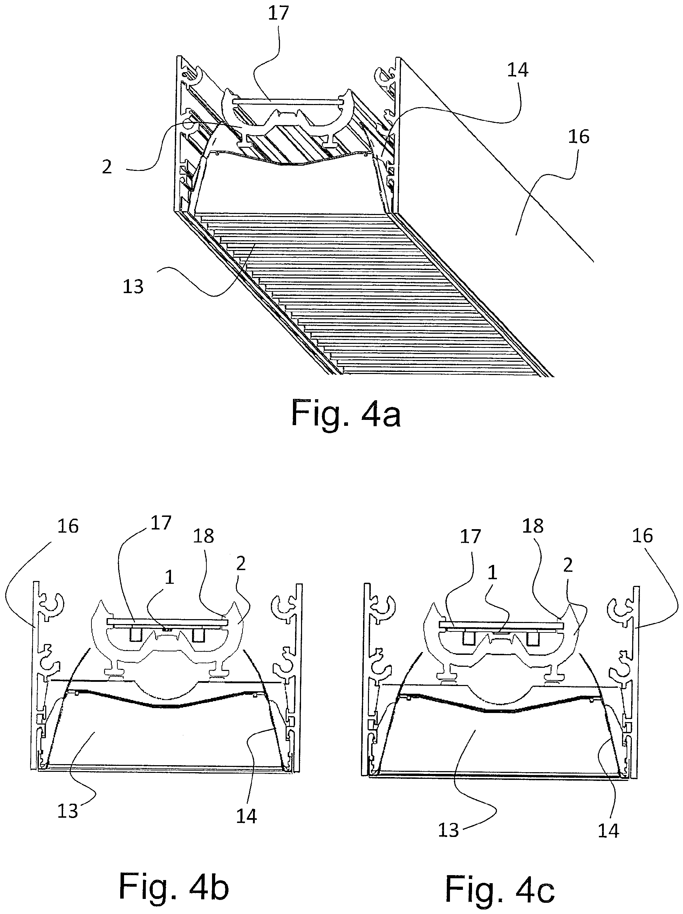

Eine Ausführungsform einer vollständigen Leuchte mit einem Linsenkörper 2 der Figur 1 ist in der Figur 4a, 4b und 4c dargestellt. Der Linsenkörper 2 ist innerhalb eines Gehäuses 16 angeordnet, welches in der vorliegenden Ausführungsform als ein Strangpressprofil hergestellt ist.

Die LEDs 1 sind hintereinander in Längsrichtung des Linsenkörpers 2 auf einer Platine 17 angeordnet, die in zwei gegenüberliegenden Nuten 18 des Linsenkörpers 2 eingeschoben ist, so dass die LEDs mittig über der Lichteinkoppelfläche 4 angeordnet sind. Die Nuten 18 sind an zwei gegenüberliegenden Seiten der Arme des Linsenkörpers 2 angeordnet, welche die Umlenkung des Lichts für den Indirektanteil bewirken. Die Festlegung der Platine 17 direkt an dem Linsenkörper 2 hat den Vorteil, dass auch bei thermischer Ausdehnung verschiedener Bauteile aus unterschiedlichen Materialien, z.B. das Gehäuse 16 und der Linsenkörper 2, die LEDs 1 nicht gegenüber den Lichteinkoppelflächen 4 und 5 dejustiert werden.

Die LEDs 1 sind in der Ausführungsform nach Figuren 4a bis 4c rechteckig, wobei die LEDs entlang oder quer zu der Längserstreckung des Linsenkörpers auf der Platine 17 angeordnet sind (siehe Figuren 4b und c). Abhängig von dem Einbau in Längs- oder Querrichtung wird das Verhältnis zwischen den Teillichtbündeln, die in die zentrale Lichtkoppelfläche 4 und die seitlichen Lichtkoppelflächen 5 eintreten, verändert, so dass sich im Ergebnis der Anteil von Direkt- und Indirektbeleuchtung einstellen lässt. Bei LEDs 1 längs des Linsenkörpers (siehe Figur 4b) ist der Indirektanteil geringer und die Lichtverteilungskurve des Direktanteils breiter als bei LEDs 1, die quer zur Leuchte eingebaut sind (siehe Figur 4c).

Die Lichtverteilung des Direktanteils des aus der zentralen Lichtaustrittsfläche 6 austretenden Lichts wird in der Leuchte durch einen Reflektor 14 und ein Raster 13 geformt. Das Raster 13 sorgt insbesondere dafür, dass bei direkter Einsicht in die Leuchte von schräg unten eine Blendung verhindert wird. Der Reflektor 14 sorgt dafür, dass keine Lichtverluste durch Absorption an den Gehäusewänden an der Innenseite des Leuchtengehäuses entstehen.

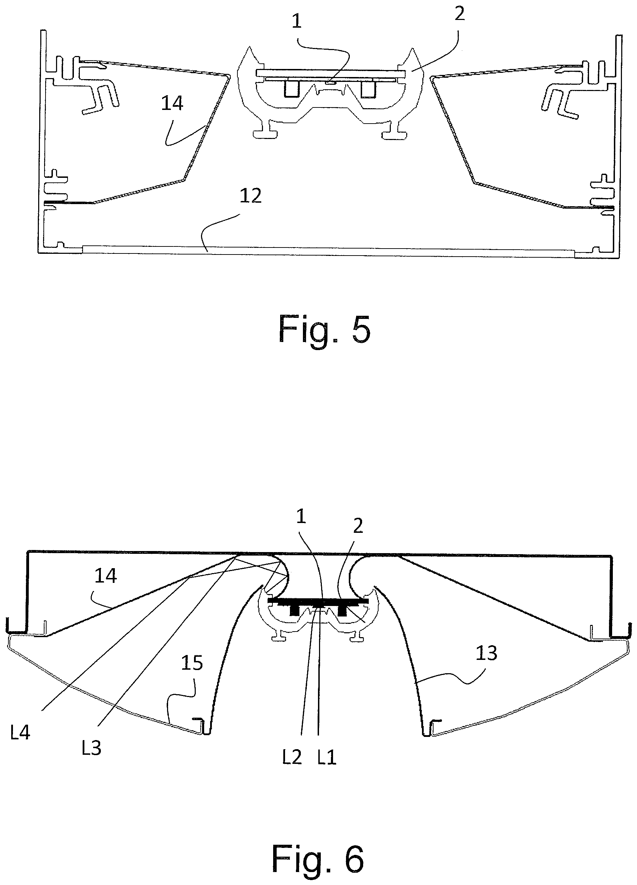

Eine weitere Ausführungsform einer Leuchte mit dem Linsenkörper gemäß Figur 1 ist in der Figur 5 dargestellt. In der Ausführungsform nach Figur 5 sind Reflektoren 14 vorgesehen, die aus Ebenen sich in Richtung zur Längsachse der Leuchte erstreckenden Teilflächen gebildet sind. Sie sorgen, ähnlich wie die Reflektoren 14 in den Figuren 4a bis c, dafür, dass kein Licht an den Seitenwänden des Leuchtengehäuses 16 absorbiert wird. Ferner ist in der Ausführungsform nach Figur 5 eine Prismenplatte 12 vorgesehen, die ähnlich wie Lamellen 13 in der Ausführungsform nach Figuren 4a bis c, für eine Entblendung der Leuchte sorgen.

Eine weitere Ausführungsform einer Leuchte ist in Figur 6 dargestellt. In dieser Ausführungsform wird der Indirektanteil der Leuchte nicht in den oberen Halbraum abgestrahlt, sondern in einen Bereich seitlich neben dem Direktanteil umgelenkt. Dazu sind Reflektoren 14 vorgesehen, die den Indirektanteil durch Mehrfachreflexion (siehe Lichtstrahlung L3 und L4 in Figur 6) um mehr als 90° umlenken. Eine Lichtaustrittsöffnung der Reflektoren 14 ist jeweils durch eine Lochmaske und/oder eine Streufolie 15 abgedeckt. Die Lichtstrahlung L3 und L4 sorgt in dieser Ausführungsform dafür, dass eine Lichtaustrittsfläche geringerer Helligkeit neben der Lichtaustrittsfläche der Lichtstrahlung für die Direktbeleuchtung (L1 und L2) gebildet wird. Dies vermindert den Leuchtdichtenunterschied zwischen der zentralen Lichtaustrittsfläche und der Umgebung der Leuchte und ist insbesondere bei Leuchten bevorzugt, die direkt an bzw. in der Decke montiert oder integriert sind, weil diese Leuchten keinen Indirektanteil zu der Deckenfläche abgeben können.

Weitere Modifikationen an dem Linsenkörper und der Leuchte gemäß der vorliegenden Erfindung sind möglich, ohne vom dem Umfang der Erfindung, die durch die Ansprüche definiert ist, abzuweichen. Insbesondere können unterschiedliche Gehäuse- und Reflektorformen Verwendung finden. Auch die Form des Linsenkörpers ist nicht auf die dargestellt Ausführungsform beschränkt. Die Lichteintritts- und Lichtaustrittsflächen für den Direktanteil können unterschiedliche Krümmungen aufweisen, um entweder als Streulinse oder als Sammellinse zu wirken. Ferner können die Grenzfläche 5, welche für die Totalreflexion der Teillichtbündel für den Indirektanteil sorgen, unterschiedlich ausgebildet sein, so dass mehr oder weniger Totalreflexionen bis zum Austritt der Lichtbündel aus den weiteren Lichtaustrittsflächen 7 stattfinden.

### Bezugszeichenliste:

- 1: LED
- 2: Linsenkörper
- 3: Grenzfläche für Totalreflexion
- 4: zentrale Lichteinkoppelfläche für den Direktanteil
- 5: weitere Lichteinkoppelfläche für den Indirektanteil
- 6: zentrale Lichtauskoppelflächen für den Direktanteil
- 7: weitere Lichtauskoppelfläche für den Indirektanteil
- 8: Befestigungshaken für Zusatzkomponenten
- 9: Diffusorscheibe oder -folie
- 10: Diffusorprofil
- 11: Zusatzlinse
- 12: Prismenplatte
- 13: Lamellen
- 14: Reflektor
- 15: Lochmaske und/oder transluzente Streufolie
- 16: Gehäuse
- 17: Platine
- 18: Nut

- L1: Lichtstrahl für Direktanteil
- L2: Lichtstrahl für Direktanteil
- L3: Lichtstrahl für Indirektanteil
- L4: Lichtstrahl für Indirektanteil

## Patentansprüche

1. Linsenkörper (2) mit einer in einem Querschnitt zentral angeordneten Lichteintrittsfläche (4) und zwei weiteren seitlich davon angeordneten Lichteintrittsflächen (5) sowie wenigstens einer mittig über dem Linsenkörper angeordneten LED (1), wobei die Lichteintrittsflächen (4; 5) so angeordnet sind, dass ein erstes Teillichtbündel der LED (1) in die zentrale Lichteinkoppelfläche (4) und zwei weitere Teillichtbündel derselben LED (1) in jeweils eine der seitlichen Lichteinkoppelflächen (5) eintreten, und
einer zentral angeordneten Lichtauskoppelfläche (6), durch welche das erste Teillichtbündel den Linsenkörper (2) in Richtung der Hauptabstrahlrichtung der LED (1) verlässt, und
wobei die zwei weiteren Teillichtbünden jeweils an wenigstens einer Grenzfläche (3) des Linsenkörpers (2) totalreflektiert werden und den Linsenkörper (2) durch jeweils eine weitere Lichtauskoppelfläche (7) entgegen der Hauptabstrahlrichtung der LED (1) verlassen,
**dadurch gekennzeichnet, dass** die zwei weiteren Teillichtbündel jeweils wenigstens drei- oder vierfach an Grenzflächen (3) des Linsenkörpers (2) totalreflektiert werden, wobei die zwei weiteren Teillichtbündel über zwei Arme durch mehrfache Totalreflexion in einen der Hauptabstrahlrichtung der LED entgegengesetzten Halbraum umgelenkt werden, bevor sie den Linsenkörper (2) durch die jeweils weitere Lichtauskoppelfläche (7) entgegen der Hauptabstrahlrichtung der LED verlassen.

2. Linsenkörper (2) nach Anspruch 1, wobei sich der Linsenkörper (2) in der Richtung senkrecht zu dem Querschnitt linear erstreckt und die wenigstens eine mittig angeordnete LED (1) mehrere linear in Richtung der Längserstreckung des Linsenkörpers hintereinander angeordnete LEDs (1) umfasst.

3. Linsenkörper (2) nach einem der vorhergehenden Ansprüche, wobei die zwei weiteren Teillichtbündel nach dem Lichtaustritt aus den beiden weiteren Lichtauskoppelflächen (7) jeweils eine Hauptabstrahlrichtung definieren, die nicht mehr als ± 60° gegenüber der entgegen gesetzten Hauptabstrahlrichtung der LED (1) geneigt sind.

4. Linsenkörper (2) nach einem der vorhergehenden Ansprüche, wobei sich die zwei aus den zwei weiteren Lichtauskoppelflächen (7) austretenden Teillichtbündel außerhalb des Lichtlenkkörpers (2) wenigstens teilweise kreuzen.

5. Linsenkörper (2) nach einem der vorhergehenden Ansprüche, wobei bezogen auf die Lage der LED (1) die beiden weiteren Lichtauskoppelflächen (7) in einem oberen Halbraum und die zentrale Lichtauskoppelfläche (6) in einem unteren Halbraum angeordnet sind.

6. Linsenkörper (2) nach einem der vorhergehenden Ansprüche, wobei die zentrale Lichteinkoppelfläche (4) und/oder die beiden weiteren Lichteinkoppelflächen (5) und/oder die zentrale Lichtauskoppelfläche (6) und/oder die beiden weiteren Lichtauskoppelflächen (7) eben, konkav oder konvex ausgebildet sind.

7. Linsenkörper (2) nach einem der vorhergehenden Ansprüche, wobei seitlich der zentralen Lichtauskoppelfläche (6) Haken (8), oder Nuten integriert sind, um ein weiteres optisches Element (9; 10; 11) vor der zentralen Lichtauskoppelfläche (6) anzuordnen und am Linsenkörper (2) zu halten.

8. Linsenkörper (2) nach einem der vorhergehenden Ansprüche, wobei in einem Bereich vor der zentralen Lichtauskoppelfläche (6) ein weiteres optisches Element, insbesondere eine Linse (11) oder eine Abdeckscheibe (9, 10), angeordnet ist, wobei das weitere optische Element (9; 10; 11) insbesondere klar transparent oder lichtstreuend ausgebildet ist.

9. Linsenkörper (2) nach einem der vorhergehenden Ansprüche, wobei in einem Bereich oberhalb und seitlich der zentralen Lichteinkoppelfläche Befestigungselemente, z.B. Haken oder Nuten (18), integriert sind, um eine Platine (17), auf welche die wenigstens eine LED (1) angeordnet ist, mit dem Linsenkörper (2) verbinden.

10. Leuchte mit einem Linsenkörper (2) nach einem der vorhergehenden Ansprüche, wobei die Leuchte ein Gehäuse (16) umfasst, in welchem der Linsenkörper (2) sowie die wenigstens eine LED (1) angeordnet sind.

11. Leuchte nach Anspruch 10, wobei in dem Gehäuse (16) eine Lichtaustrittsfläche vorgesehen ist, durch welche Licht für eine Direktbeleuchtung austritt und das Licht der Indirektbeleuchtung wenigstens überwiegend aus dem Teillichtbündel gebildet ist, welches den Linsenkörper aus der zentralen Lichtauskoppelfläche (6) verlässt.

12. Leuchte nach Anspruch 10 oder 11, wobei das Gehäuse (16) eine oder mehrere Lichtaustrittsflächen aufweist, durch welche Licht für eine Indirektbeleuchtung die Leuchte nach oben verlässt, wobei das Licht der Indirektbeleuchtung wenigstens überwiegend durch die Teillichtbündel gebildet wird, welche den Linsenkörper (2) durch die zwei weiteren Lichtauskoppelfläche (7) verlassen.

13. Leuchte nach einem der Ansprüche 10 bis 12, wobei in dem Leuchtengehäuse (16) Reflektoren (14) vorgesehen sind, welche das Licht umlenken, welches den Linsenkörper (2) aus der zentralen Lichtauskoppelfläche (6) und/oder aus den zwei weiteren Lichtauskoppelflächen (7) verlässt, wobei die Reflektoren z.B. das Licht, welches den Linsenkörper (2) aus den zwei weiteren Lichtauskoppelflächen (7) verlässt, seitlich durch eine oder mehrere Reflexionen um wenigstens 90° umlenken.

14. Leuchte nach einem der Ansprüche 10 bis 13, wobei in dem Gehäuse unterhalb der zentralen Lichtauskoppelfläche (6) des Linsenkörpers (2) mehrere Lamellen (13) jeweils in einer Ebene parallel zu dem besagten Querschnitt angeordnet sind, und/oder die zwei weiteren Lichtauskoppelflächen (7) innerhalb des Gehäuses (16) oder oberhalb des Gehäuses (16) und/oder innerhalb jeweils eines Reflektors (14) angeordnet sind.

## Claims

1. Lens body (2) having a light entry surface (4) arranged centrally in a cross-section and two further light entry surfaces (5) arranged laterally thereof as well as at least one LED (1) arranged centrally above the lens body, wherein the light entry surfaces (4; 5) are arranged such that a first partial light beam of the LED (1) enters the central light entry surface (4) and two further partial light beams of the same LED (1) enter in each case one of the lateral light coupling surfaces (5), and
a centrally arranged light output surface (6), through which the first partial light beam leaves the lens body (2) in the direction of the main radiation direction of the LED (1), and
wherein the two further partial light bundles are each totally reflected at at least one boundary surface (3) of the lens body (2) and leave the lens body (2) by in each case one further light output surface (7) counterwise to the main beam direction of the LED (1),
**characterized in that** the two further partial light beams are each totally reflected at least three or four times at boundary surfaces (3) of the lens body (2), the two further partial light beams being deflected via two arms by multiple total reflection into a half-space opposite to the main beam direction of the LED before they leave the lens body (2) through the respective further light output surface (7) contrary to the main beam direction of the LED.

2. Lens body (2) according to claim 1, wherein the lens body (2) extends linearly in the direction perpendicular to the cross-section and the at least one centrally arranged LED (1) comprises a plurality of LEDs (1) arranged linearly in the direction of the longitudinal extension of the lens body.

3. Lens body (2) according to one of the preceding claims, the two further partial light beams each defining a main radiation direction after the light emerges from the two further light output surfaces (7) which are inclined by no more than ± 60° with respect to the opposite main radiation direction of the LED (1).

4. Lens body (2) according to one of the preceding claims, wherein the two partial light beams emerging from the two further light outcoupling surfaces (7) cross at least partially outside the light deflecting body (2).

5. Lens body (2) according to one of the preceding claims, the two further light output surfaces (7) being arranged in an upper half space and the central light output surface (6) being arranged in a lower half space with respect to the position of the LED (1).

6. Lens body (2) according to one of the preceding claims, wherein the central light entry surface (4) and/or the two further light entry surfaces (5) and/or the central light output surface (6) and/or the two further light output surfaces (7) are of planar, concave or convex design.

7. Lens body (2) according to one of the preceding claims, hooks (8) or grooves being integrated laterally of the centred light output surface (6) in order to arrange a further optical element (9; 10; 11) in front of the central light output surface (6) and to hold it on the lens body (2).

8. Lens body (2) according to one of the preceding claims, a further optical element, in particular a lens (11) or a cover pane (9, 10), being arranged in a region in front of the central light output surface (6), the further optical element (9; 10; 11) being designed in particular clearly transparent or light scattering.

9. Lens body (2) according to one of the preceding claims, fastening elements, e.g. hooks or grooves (18), being integrated in a region above and laterally of the central light input surface in order to connect a circuit board (17), on which at least one LED (1) is arranged, to the lens body (2).

10. Luminaire having a lens body (2) according to one of the preceding claims, the luminaire comprising a housing (16) in which the lens body (2) and the at least one LED (1) are arranged.

11. Luminaire according to claim 10, wherein a light exit surface is provided in the housing (16), through which light for direct illumination emerges, and the light of the indirect illumination is formed at least predominantly from the partial light beam, which leaves the lens body from the central light output surface (6).

12. Luminaire according to claim 10 or 11, wherein the housing (16) has one or more light exit surfaces through which light for indirect illumination leaves the luminaire upwards, wherein the light of the indirect illumination is formed at least predominantly by the partial light beams which leave the lens body (2) through the two further light output surfaces (7).

13. Luminaire according to one of the claims 10 to 12, wherein reflectors (14) are provided in the luminaire housing (16), which reflect the light which exits the lens body (2) from the central light output surface (6) and/or from the two wide-angle light excoupling surfaces (6), wherein the reflectors laterally deflect the light which leaves the lens body (2) from the two further light outcoupling surfaces (7) by at least 90° by one or more reflections.

14. Luminaire according to one of claims 10 to 13, wherein a plurality of lamellae (13) are arranged in the housing below the central light outcoupling surface (6) of the lens body (2), each in a plane parallel to the said cross-section, and/or the two further light outcoupling surfaces (7) are arranged inside the housing (16) or above half of the housing (16) and/or inside in each case one reflector (14).

## Revendications

1. Corps de lentille (2) avec une surface d'entrée de lumière (4) disposée de manière centrale dans une section transversale et deux autres surfaces d'entrée de lumière (5) disposées latéralement par rapport à celle-ci ainsi qu'au moins une LED (1) disposée de manière centrale au-dessus du corps de lentille, les surfaces d'entrée de lumière (4 ; 5) étant disposées de façon à ce qu'un premier faisceau lumineux partiel des LED (1) entrent dans la surface d'entrée de lumière centrale (4) et deux autres faisceaux lumineux partiels de la même LED (1) dans une des surfaces d'entrée de lumière latérales (5), et une surface de sortie de lumière (6) disposée de manière centrale, à travers laquelle le premier faisceau lumineux partiel quitte le corps de lentille (2) en direction de la direction d'émission principale de la LED (1) et
les deux autres faisceaux lumineux partiels sont réfléchis totalement au niveau d'au moins une surface limite (3) du corps de lentille (2) et quittent le corps de lentille (2) à travers une autre surface de sortie de lumière (7) à l'encontre de la direction d'émission principale de la LED (1),
**caractérisé en ce que** les deux autres faisceaux lumineux partiels sont totalement réfléchis chacun au moins trois fois ou quatre fois au niveau des surfaces limites (3) du corps de lentille (2), les deux autres faisceaux lumineux partiels étant déviés par deux bras par une réflexion totale multiple dans un demi-espace opposé à la direction d'émission principale de la LED, avant qu'ils ne quittent le corps de lentille (2) à travers l'autre surface de sortie de lumière (7) à l'encontre de la direction d'émission principale de la LED.

2. Corps de lentille (2) selon la revendication 1, le corps de lentille (2) s'étendant linéairement dans la direction perpendiculaire à la section transversale et l'au moins une LED (1) disposée de manière centrale comprenant plusieurs LED (1) disposées linéairement les unes derrière les autres en direction de l'extension longitudinale du corps de lentille.

3. Corps de lentille (2) selon l'une des revendications précédentes, les deux autres faisceaux lumineux partiels définissant chacun, après la sortie de la lumière hors des deux autres surfaces de sortie de lumière (7), une direction d'émission principale, qui ne sont pas inclinées de plus de ± 60° par rapport à la direction d'émission principale opposée de la LED (1).

4. Corps de lentille (2) selon l'une des revendications précédentes, les deux faisceaux lumineux partiels sortant des deux autres surfaces de sortie de lumière (7) se croisant au moins partiellement à l'extérieur du corps de déviation de lumière (2).

5. Corps de lentille (2) selon l'une des revendications précédentes, moyennant quoi, par rapport à la position de la LED (1), les deux autres surfaces de sortie de lumière (7) sont disposées dans un demi-espace supérieur et la surface de sortie de lumière centrale (6) sont disposées dans un demi-espace inférieur.

6. Corps de lentille (2) selon l'une des revendications précédentes, la surface d'entrée de lumière centrale (4) et/ou les deux autres surfaces d'entrée de lumière (5) et/ou la surface de sortie de lumière centrale (6) et/ou les deux autres surfaces de sortie de lumière (7) présentent une forme plane, concave ou convexe.

7. Corps de lentille (2) selon l'une des revendications précédentes, moyennant quoi, latéralement par rapport à la surface de sortie de lumière centrale (6), sont intégrés des crochets (8) ou des rainures, afin de disposer un autre élément optique (9 ; 10 ; 11) devant la surface de sortie de lumière centrale (6) et de la maintenir sur le corps de lentille (2).

8. Corps de lentille (2) selon l'une des revendications précédentes, un autre élément optique, plus particulièrement une lentille (11) ou un disque de recouvrement (9, 10), étant disposé dans une zone devant la surface de sortie de lumière centrale (6), l'autre élément optique (9 ; 10 ; 11) étant conçu de manière transparente ou de façon à diffuser la lumière.

9. Corps de lentille (2) selon l'une des revendications précédentes, moyennant quoi, dans une zone au-dessus sur le côté de la surface d'entrée de lumière centrale, sont intégrés des éléments de fixation, par exemple des crochets ou des rainures (18), afin de relier une platine (17), sur laquelle l'au moins une LED (1) est disposée, avec le corps de lentille (2).

10. Luminaire avec un corps de lentille (2) selon l'une des revendications précédentes, le luminaire comprenant un boîtier (16), dans lequel sont disposés le corps de lentille (2) ainsi que l'au moins une LED (1).

11. Luminaire selon la revendication 10, moyennant quoi, dans le boîtier (16), une surface de sortie de lumière est prévue, à travers laquelle sort la lumière pour un éclairage direct et la lumière de l'éclairage indirect est constituée au moins majoritairement du faisceau lumineux partiel qui quitte le corps de lentille par la surface de sortie de lentille centrale (6).

12. Luminaire selon la revendication 10 ou 11, le boîtier (16) comprenant une ou plusieurs surfaces de sortie de lumière, à travers lesquelles la lumière pour un éclairage indirect quitte le luminaire vers le haut, la lumière de l'éclairage indirect étant constituée au moins majoritairement des faisceaux lumineux partiels qui quittent le corps de lentille (2) à travers les deux autres surfaces de sortie de lumière (7).

13. Luminaire selon l'une des revendications 10 à 12, moyennant quoi, dans le boîtier du luminaire (16), sont prévus des réflecteurs (14), qui dévient la lumière qui quitte le corps de lentille (2) par la surface de sortie de lumière centrale (6) et/ou par les deux autres surface de sortie de lumière (7), les réflecteurs déviant par exemple la lumière qui quitte le corps de lentille (2) par les deux autres surfaces de sortie de lumière (7) latéralement à l'aide d'une ou plusieurs réflexions d'au moins 90°.

14. Luminaire selon l'une des revendications 10 à 13, moyennant quoi, dans le boîtier en dessous de la surface de sortie de lumière centrale (6) du corps de lentille (2), sont disposées plusieurs lamelles (13) dans un plan parallèle à la section transversale mentionnée, et/ou les deux autres surfaces de sortie de lumière (7) sont disposées à l'intérieur du boîtier (16) ou au-dessus du boîtier (16) et/ou à l'intérieur d'un réflecteur (14).
